# FASCICULE DE BREVET EUROPEEN

(11) **EP 2 452 384 B1**
(45) Date de publication et mention de la délivrance du brevet: **02.04.2014**
(21) Numéro de dépôt: 10729874.7
(22) Date de dépôt: 06.07.2010
(51) Int. Cl.: H01M 2/20, H01M 10/42, H01M 10/0525

(54) **BATTERIE D'ACCUMULATEURS A PERTES REDUITES**
VERLUSTARMER AKKUMULATOR
LOW-LOSS STORAGE BATTERY

(30) Priorité: 08.07.2009 FR 0903358
(43) Date de publication de la demande: 16.05.2012
(73) Titulaire: Commissariat à l'Énergie Atomique et aux Énergies Alternatives, 75015 Paris (FR)
(72) Inventeur: BERANGER, Bruno, F-38140 Saint Martin d'Uriage (FR); CHATROUX, Daniel, F-38470 Teche (FR); DAUCHY, Julien, F-38160 Chatte (FR)
(74) Mandataire: Guérin, Jean-Philippe
(86) Numéro de dépôt international: PCT/EP2010/059674
(87) Numéro de publication internationale: WO 2011/003924

(56) Documents cités:
- WO-A1-2009/021762
- US-A- 6 051 955

## Description

L'invention concerne les batteries d'accumulateurs électrochimiques. Celles-ci peuvent par exemple être utilisées dans le domaine des transports électriques et hybrides ou les systèmes embarqués.

Un accumulateur électrochimique a habituellement une tension nominale de l'ordre de grandeur suivant :
1.2 V pour des batteries de type NiMH,
3.3 V pour une technologie lithium-ion phosphate de Fer, LiFePO4,
4.2 V pour une technologie de type lithium-ion à base d'oxyde de cobalt.

Ces tensions nominales sont trop faibles par rapport aux exigences de la plupart des systèmes à alimenter. Pour obtenir le niveau de tension adéquat, on place en série plusieurs accumulateurs. Pour obtenir de fortes puissances et capacités, on place plusieurs accumulateurs en parallèle. Le nombre d'étages (nombre d'accumulateurs en série) et le nombre d'accumulateurs en parallèle dans chaque étage varient en fonction de la tension, du courant et de la capacité souhaités pour la batterie. L'association de plusieurs accumulateurs est appelée une batterie d'accumulateurs.

Lors de la conception d'une batterie d'accumulateurs, on cherche à fournir un certain niveau de puissance sous une tension de fonctionnement définie. Pour maximiser la puissance, on maximise le courant délivré en réduisant autant que possible la résistance interne parasite de la batterie.

Les batteries de type lithium-ion sont bien adaptées pour des applications de transport par leur capacité à stocker une énergie importante dans une faible masse. Parmi les technologies de batteries lithium-ion, les batteries à base de phosphate de fer offrent un haut niveau de sécurité intrinsèque par rapport aux batteries lithium-ion à base d'oxyde de cobalt, au détriment d'une énergie massique un peu inférieure. Par ailleurs, les batteries lithium-ion présentent aussi une tension minimale en dessous de laquelle un accumulateur peut subir une dégradation.

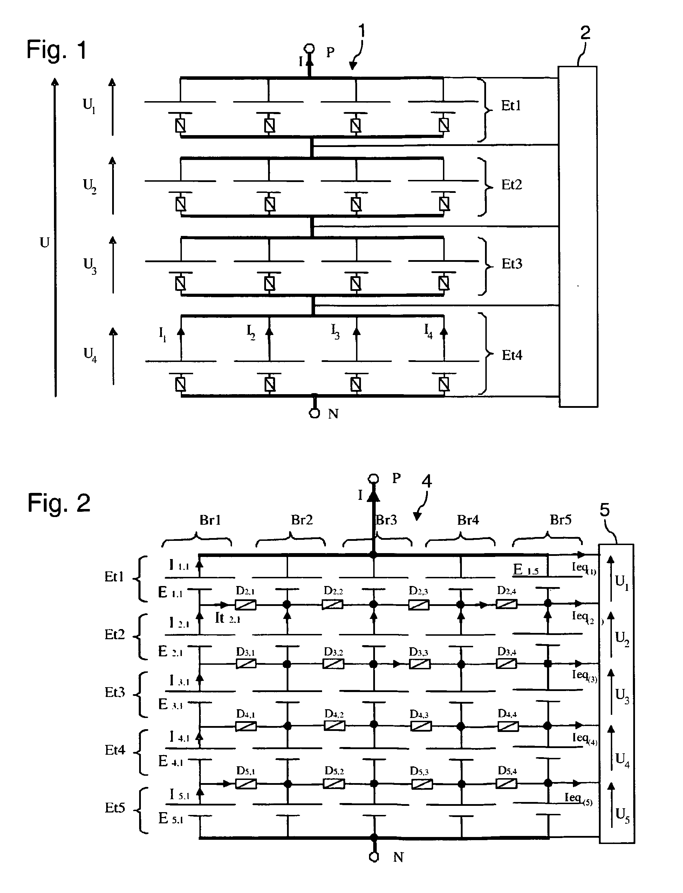

La figure 1 représente une batterie d'accumulateurs lithium-ion 1 connue de l'état de la technique. La batterie 1 est composée de quatre étages Et1, Et2, Et3 et Et4 connectés en série. Chaque étage comprend quatre accumulateurs similaires, connectés en parallèle. Les bornes des accumulateurs d'un même étage sont raccordées ensemble par l'intermédiaire de connexions électriques de forte section. Chaque étage est également raccordé aux étages adjacents par l'intermédiaire de connexions électriques de forte section afin de laisser passer de forts courants correspondant à la somme des courants des accumulateurs d'un étage. Une ou plusieurs charges sont destinées à être connectées aux bornes N et P de la batterie 1.

La tension aux bornes des quatre étages est notée respectivement U1, U2, U3 et U4. Dans ce schéma, la tension totale U entre les bornes N et P de la batterie 1 est la somme des tensions U1, U2, U3 et U4. Le courant traversant chaque accumulateur du quatrième étage Et4 est notée respectivement I1, I2, I3 et I4. Le courant I généré sur la borne P de la batterie 1 est la somme des courants I1, I2, I3 et I4.

Afin de protéger la batterie 1 des conséquences d'un court-circuit dans un accumulateur, chaque accumulateur présente un fusible qui lui est connecté en série. Lorsqu'un accumulateur forme un court-circuit, le courant le traversant augmente sensiblement et fait fondre son fusible série afin de protéger le reste de la batterie 1. En l'absence de fusible, la dissipation d'énergie dans l'accumulateur en court-circuit induirait son échauffement ainsi que celui des autres accumulateurs se déchargeant. Une telle dissipation pourrait être la cause d'un départ de feu. Les technologies lithium-ion à base d'oxyde de Cobalt et à base de phosphate de fer sont particulièrement à risque lorsqu'un étage comprend un grand nombre d'accumulateurs en parallèle pour stocker une énergie importante. L'utilisation de fusibles s'avère donc particulièrement appropriée pour ces technologies.

Les différents accumulateurs d'une batterie lithium-ion n'écrêtent pas naturellement la tension à leurs bornes. Il est nécessaire d'ajouter pour chaque étage un circuit annexe 2 d'équilibrage et de contrôle de charge, pour que les étages Et1 à Et4 puissent être chargés correctement. La mise en série de quatre étages de quatre accumulateurs nécessite d'associer à chaque étage une fonction d'équilibrage et de contrôle de charge. Le circuit 2 gère donc la charge et l'équilibrage de chaque étage de la batterie 1.

La charge d'un accumulateur se traduit par une croissance de la tension à ses bornes. On considère un accumulateur chargé lorsque celui-ci a atteint un niveau de tension nominal défini par son processus électrochimique. Si la charge est interrompue avant que cette tension ne soit atteinte, l'accumulateur n'est pas complètement chargé.

Dans toute la durée de vie de la batterie, certains défauts peuvent apparaître sur certains accumulateurs composant la batterie. Un défaut sur un accumulateur se traduit généralement soit par la mise en court-circuit de l'accumulateur, soit par une mise en circuit ouvert, soit par un courant de fuite important dans l'accumulateur. Il est important de connaître l'impact de la défaillance d'un accumulateur sur la batterie. Une mise en circuit ouvert ou en court-circuit peut provoquer une défaillance globale de toute la batterie.

Dans le cas de l'apparition d'un courant de fuite important dans un accumulateur d'un étage, la batterie se comporte comme une résistance qui provoque une décharge des accumulateurs de l'étage considéré jusqu'à zéro. Les risques de départ de feu sont faibles car l'énergie est dissipée relativement lentement. En technologie lithium-ion, la décharge des accumulateurs de l'étage jusqu'à une tension nulle les détériore ce qui implique leur remplacement en plus de l'accumulateur initialement défaillant. Lorsqu'un accumulateur forme un court-circuit, les trois autres accumulateurs de l'étage vont initialement se décharger dans cet accumulateur, du fait de la forte section des connexions électriques entre eux. Le fusible placé en série avec l'accumulateur en court-circuit va interrompre la décharge parasite des trois autres accumulateurs.

Une telle batterie présente un certain nombre d'inconvénients. Les fusibles sont dimensionnés pour être traversés par des courants importants, et induisent ainsi un surcoût important. De plus, la résistance interne des fusibles augmente les pertes par effet Joule à l'intérieur de la batterie, ce qui réduit notablement ses performances en puissance.

Le document US6051955 décrit une batterie d'accumulateurs comprenant deux branches connectées en parallèle. Chaque branche comprend 3 accumulateurs connectés en série. Ces accumulateurs sont chargés et déchargés par l'intermédiaire de deux bornes de sortie. Des transistors de protection sont interposés entre une des bornes de sortie et chaque branche d'accumulateurs. Un circuit de surveillance détecte une charge ou une décharge excessive des éléments. Si tel est le cas, le circuit de surveillance ouvre les transistors de protection entre la borne de sortie et les branches d'accumulateurs.

Chaque accumulateur d'une branche est connecté en parallèle à un accumulateur de l'autre branche. Deux fusibles connectés en série connectent ainsi deux accumulateurs respectifs. Le circuit de surveillance est connecté à chaque noeud entre deux fusibles en série.

Cette batterie d'accumulateurs comprend de plus des fusibles connectés en série entre une branche et un transistor de protection.

Une telle batterie présente un certain nombre d'inconvénients :
- d'importantes pertes par effet Joule sont induites par les fusibles en série et les transistors de protection durant le fonctionnement de la batterie ;
- toute défaillance d'un accumulateur induit l'interruption immédiate du fonctionnement de la batterie par le circuit de surveillance ;
- la capacité de la batterie n'est pas optimale : en charge, l'accumulateur le plus chargé interrompt la charge de la batterie alors que les autres accumulateurs n'ont pas encore atteint leur charge optimale. En décharge, l'accumulateur le moins chargé interrompt la décharge alors que les autres accumulateurs n'ont pas atteint leur seuil de décharge.

Le document WO2009/021762 décrit une batterie d'accumulateurs comprenant deux branches en parallèle. Dans un mode de réalisation, chaque branche présente quatre accumulateurs connectés en série. Les accumulateurs des deux branches sont de types différents : la première branche comprend des accumulateurs de forte puissance, tandis que la deuxième branche comprend des accumulateurs de forte capacité. Chaque accumulateur de forte capacité est connecté en parallèle à un accumulateur de forte puissance par l'intermédiaire d'une résistance. Une telle batterie peut ainsi à la fois répondre à des pics d'appels de courant et présenter une grande capacité.

Cette batterie présente en pratique des inconvénients. Les accumulateurs de forte puissance n'améliorent pas notablement la capacité de la batterie. Par ailleurs, la batterie n'est en pratique pas protégée de certains dysfonctionnements. Ainsi, un court-circuit dans un accumulateur peut induire une surintensité dans l'accumulateur auquel il est connecté en parallèle par l'intermédiaire d'une résistance. Les accumulateurs des deux branches étant en outre de types différents, aucune compensation n'est envisageable en cas de défaillance d'un accumulateur.

L'invention vise à résoudre un ou plusieurs de ces inconvénients sans altérer le niveau de sécurité fourni par la batterie. L'invention porte ainsi sur une batterie d'accumulateurs, comprenant au moins des première et deuxième branches présentant chacune au moins des premier et deuxième accumulateurs connectés en série, la batterie comprenant en outre un disjoncteur par l'intermédiaire duquel les premiers accumulateurs sont connectés en parallèle et par l'intermédiaire duquel les deuxièmes accumulateurs sont connectés en parallèle. Le seuil de coupure du disjoncteur est dimensionné pour conduire le courant lorsque l'un desdits accumulateurs forme un circuit ouvert.

Selon une variante, la batterie comprend une troisième branche présentant des premier et deuxième accumulateurs connectés en série, la batterie comprenant en outre un autre disjoncteur par l'intermédiaire duquel les premiers accumulateurs sont connectés en parallèle et par l'intermédiaire duquel les deuxièmes accumulateurs sont connectés en parallèle.

Selon une autre variante, lesdits premiers accumulateurs forment un premier étage de la batterie et lesdits deuxièmes accumulateurs forment un second étage de la batterie, la batterie comprenant en outre un circuit d'équilibrage de la charge des accumulateurs connecté aux bornes de chaque étage.

Selon encore une variante, chaque jonction entre les accumulateurs en parallèle est raccordée au circuit d'équilibrage.

Selon encore une autre variante, les accumulateurs des première et troisième branches sont non adjacents, et le circuit d'équilibrage est connecté aux bornes des accumulateurs des première et troisième branches.

Selon une variante, la section de la jonction entre les accumulateurs en parallèle est inférieure à la section de la jonction entre les accumulateurs en série.

Selon encore une variante, le disjoncteur comprend une connexion électrique fusible.

Selon une autre variante, le seuil de coupure du disjoncteur est dimensionné pour s'ouvrir lorsque l'un desdits accumulateurs est en court-circuit.

Selon une variante, lesdits accumulateurs sont d'un type pour lequel l'application d'une tension à leurs bornes supérieure de 15% à leur tension nominale n'induit pas leur destruction.

Selon encore une variante, les accumulateurs sont de type lithium-ion.

Selon une autre variante, lesdites branches sont dépourvues de disjoncteurs de protection disposés en série avec lesdits accumulateurs.

Selon une autre variante, la résistance interne desdits accumulateurs est inférieure à la résistance interne dudit disjoncteur.

D'autres caractéristiques et avantages de l'invention ressortiront clairement de la description qui en est faite ci-après, à titre indicatif et nullement limitatif, en référence aux dessins annexés, dans lesquels :
- la figure 1 est une représentation schématique d'une batterie de l'état de la technique ;
- la figure 2 est une représentation schématique d'un mode de réalisation d'une batterie selon l'invention ;
- la figure 3 représente schématiquement des courants traversant des accumulateurs de la batterie en fonctionnement normal ;
- la figure 4 représente schématiquement les courants dans la batterie en présence d'un court-circuit lorsque les disjoncteurs sont désactivés ;
- la figure 5 est une représentation schématique des courants traversant les accumulateurs de la batterie postérieurement au court-circuit ;
- la figure 6 est un diagramme représentant des profils de décharge de la batterie ;
- la figure 7 est une représentation schématique des courants en présence d'un accumulateur en circuit ouvert ;
- les figures 8 et le 9 sont des représentations schématiques d'autres modes de réalisation d'une batterie selon l'invention ;
- la figure 10 est une vue en perspective éclatée d'un exemple de disposition d'accumulateurs dans un autre mode de réalisation d'une batterie selon l'invention ;
- la figure 11 est une représentation schématique d'un autre mode de réalisation d'une batterie selon l'invention.

L'invention propose une batterie comprenant au moins des première et deuxième branches présentant chacune au moins des premier et deuxième accumulateurs connectés en série, la batterie comprenant en outre un disjoncteur par l'intermédiaire duquel les premiers accumulateurs sont connectés en parallèle et par l'intermédiaire duquel les deuxièmes accumulateurs sont connectés en parallèle. Le seuil de coupure du disjoncteur est dimensionné pour conduire du courant lorsque l'un desdits accumulateurs forme un circuit ouvert.

Le disjoncteur permet de protéger efficacement les accumulateurs de la batterie contre des surintensités lors d'un dysfonctionnement, à un coût réduit et avec une moindre dissipation par effet Joule en fonctionnement normal. De plus, le disjoncteur permet de poursuivre l'utilisation de la batterie en permettant à l'ensemble des accumulateurs fonctionnels de compenser la défaillance d'un accumulateur en coupe-circuit.

La figure 2 représente une batterie 4 selon un premier mode de réalisation de l'invention. La batterie 4 présente une borne positive P et une borne négative N. Une ou plusieurs charges pourront être connectées entre les bornes P et N. La batterie 4 comprend plusieurs branches Br1 à Br5. Dans l'exemple illustré, la batterie 4 comprend cinq branches. Un indice j correspondra par la suite à la branche Brⱼ. Chaque branche Brⱼ comprend plusieurs accumulateurs E_{i,j} connectés en série, de type lithium-ion à base de phosphate de fer. La branche Br₁ comprend les accumulateurs E_{1,1}, E_{2,1}, E_{3,1}, E_{4,1} et E_{5,1}. Dans l'exemple illustré, chaque branche Brⱼ comprend cinq accumulateurs E_{i,j}. Un indice i correspondra par la suite à un étage Etᵢ incluant cinq accumulateurs appartenant respectivement à chacune des branches.

Les accumulateurs d'un même étage sont connectés en parallèle par l'intermédiaire de disjoncteurs. On désigne généralement par disjoncteur un interrupteur permettant d'empêcher le passage du courant électrique et effectuant cette interruption en cas de surcharge afin de protéger les composants auxquels il est connecté.

Les accumulateurs E_{1,j} du premier étage Et₁ sont connectés en parallèle. Les accumulateurs E_{1,j} sont connectés par leur borne positive à la borne P de la batterie 4. La connexion de ces bornes positives à la borne P est avantageusement réalisée par des connecteurs de forte section car cette connexion a une fonction de collecteur des courants parallèles des différentes branches. Les bornes négatives des accumulateurs E_{1,j} du premier étage Et₁ sont connectées ensemble par l'intermédiaire de disjoncteurs. Ainsi, le disjoncteur D_{2,1} connecte la borne négative de l'accumulateur E_{1,1} à la borne négative de l'accumulateur E_{1,2}.

Les accumulateurs E_{2,j} du deuxième étage Et₂ sont également connectés en parallèle. Les accumulateurs E_{3,j} du troisième étage Et₃ d'une part, et les accumulateurs E_{4,j} du quatrième étage Et₄ d'autre part, sont également connectés en parallèle. Pour chacun de ces étages intermédiaires, les bornes positives des accumulateurs d'un même étage sont connectées ensemble par l'intermédiaire de disjoncteurs et leurs bornes négatives sont également connectées ensemble par l'intermédiaire de disjoncteurs.

Comme illustré, chaque disjoncteur est utilisé pour une connexion en parallèle pour deux étages adjacents (deux étages partageant des noeuds de connexion). Ainsi, le disjoncteur D_{2,1} est utilisé pour connecter en parallèle les accumulateurs E_{1,1} et E_{1,2} mais également pour connecter en parallèle les accumulateurs E_{2,1} et E_{2,2}.

Les accumulateurs E_{5,j} du cinquième étage Et₅ sont connectés en parallèle. Les bornes positives des accumulateurs E_{5,j} du cinquième étage Et₅ sont connectées ensemble par l'intermédiaire de disjoncteurs. Ainsi, le disjoncteur D_{5,1} connecte la borne positive de l'accumulateur E_{5,1} à la borne positive de l'accumulateur E_{5,2}. Les accumulateurs E_{5,j} sont connectés par leur borne négative à la borne N de la batterie 4. La connexion de ces bornes négatives à la borne N est avantageusement réalisée par des connecteurs de forte section car cette connexion a une fonction d'introduction des courants parallèles dans les différentes branches.

Un circuit de charge et d'équilibrage 5 est connecté aux bornes de chacun des étages. L'homme du métier déterminera un circuit 5 adéquat pour réaliser l'équilibrage des tensions des accumulateurs de chaque étage et gérer la charge de chacun des accumulateurs.

Le courant traversant un accumulateur E_{i,j} est noté I_{i,j}. Le courant traversant un disjoncteur D_{i,j} est noté It_{i,j}. La tension aux bornes d'un étage i est notée Uᵢ. Le courant échangé par les bornes positives d'un étage i avec le circuit de charge et d'équilibrage 5 est noté leq₍ᵢ₎.

Un disjoncteur est défini comme étant un dispositif de protection électrique dont la fonction est d'interrompre ou de limiter très fortement (par exemple par un facteur 100) le courant électrique le traversant en cas de surcharge sur un circuit électrique. Le dimensionnement des disjoncteurs de l'exemple illustré sera détaillé ultérieurement.

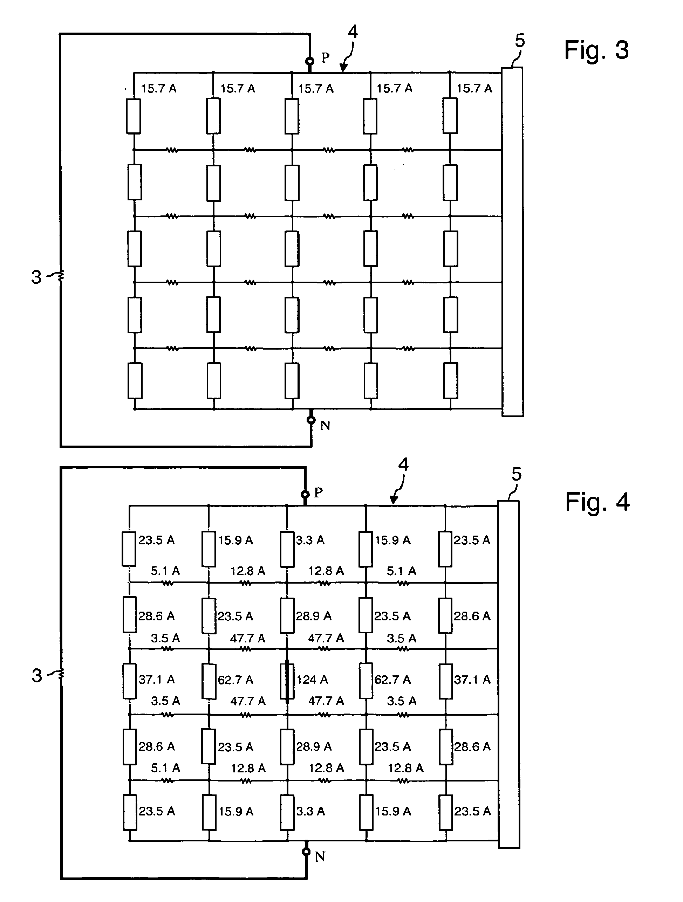

La figure 3 représente un exemple théorique de batterie 4 en fonctionnement normal, en présence d'une charge 3 connectée entre ses bornes P et N. La charge 3 est assimilée à une résistance de 0,2Ohms. Chaque accumulateur est assimilé à une source de tension de 3,3V en série avec une résistance de 0,01Ohms (représentative de sa résistance interne). Les disjoncteurs sont assimilés à des résistances de 0,0150hms dont le seuil de coupure est à 6A. La connexion entre les accumulateurs en série d'une même branche est dimensionnée de manière adéquate pour résister au courant nominal de la branche.

Les accumulateurs sont dans cet exemple à leur charge maximale et présentent tous une charge identique. Ainsi, aucun courant ne traverse les disjoncteurs. On constate ainsi qu'en fonctionnement normal, les disjoncteurs n'induisent pas de pertes par effet Joule puisque les courants les traversant sont nuls. Les pertes par effet Joule à l'intérieur de la batterie 4 sont ici uniquement induites par la résistance interne des accumulateurs. L'efficacité en puissance de la batterie est ainsi optimisée. Chaque branche est traversée par un courant de 15,7A, induisant un courant de 78,5A (valeurs arrondies) à travers la charge 3.

Les disjoncteurs sont disposés dans les connexions en parallèle entre les accumulateurs. En fonctionnement normal, ces connexions ne doivent être parcourues que par des courants réduits lors de la charge ou de l'équilibrage des différents accumulateurs (en particulier en fin de charge de la batterie 4). Les courants traversant les disjoncteurs en fonctionnement normal restent toujours inférieurs à leur seuil de coupure. Par conséquent, le dimensionnement des disjoncteurs utilisés peut être nettement inférieur à celui qui serait nécessaire pour des disjoncteurs disposés en série. On peut également constater que le nombre de disjoncteurs utilisés est inférieur à celui qui serait nécessaire pour des disjoncteurs série. Le coût de la batterie 4 est ainsi notablement réduit.

Pour assurer une protection optimale des accumulateurs, les disjoncteurs ont un seuil de coupure inférieur au courant de charge ou de décharge maximal toléré pour un accumulateur. Dans cet exemple, le seuil de coupure est de 6A et est nettement inférieur au courant de 15,7A traversant chacun des accumulateurs à la figure 3.

La figure 4 illustre des valeurs de courant théoriques, dans l'hypothèse où l'accumulateur E_{3,3} formerait un court-circuit et en absence de coupure par les disjoncteurs. En supposant que le courant de charge ou de décharge maximal d'un accumulateur soit de 30A, on constate que tous les accumulateurs du troisième étage seraient susceptibles d'être détériorés. On constate que les connexions parallèles entre les accumulateurs sont soumises à des courants plus ou moins importants. Les disjoncteurs D_{2,2}, D_{2,3}, D_{3,2}, D_{3,3}, D_{4,2}, D_{4,3} D_{5,2}, et D_{5,3} seraient traversés par des courants supérieurs à leur seuil de coupure.

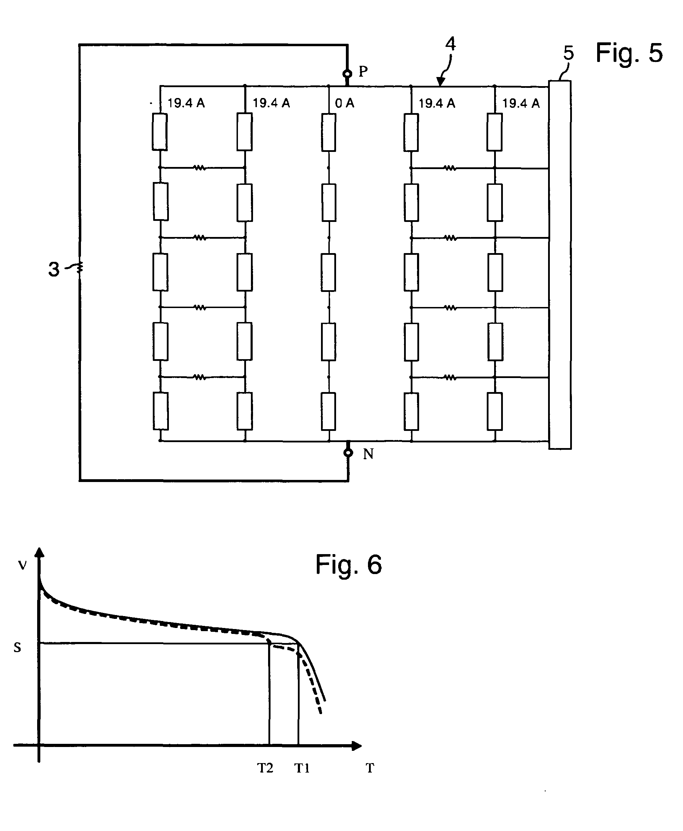

Ainsi, comme illustré à la figure 5, les disjoncteurs D_{2,2}, D_{2,3}, D_{3,2}, D_{3,3}, D_{4,2}, D_{4,3} D_{5,2}, et D_{5,3} sont ouverts du fait des surintensités induites par l'accumulateur E_{3,3}. Les surintensités sont ainsi limitées dans le temps, ce qui élimine tout risque de départ de feu par échauffement d'un accumulateur. Durant une phase transitoire, du fait d'une résistance moindre dans la branche 3, celle-ci est rechargée par les autres branches jusqu'à ce que les niveaux de tension des différentes branches s'équilibrent. Ce courant négatif permet de charger les accumulateurs E_{1,3}, E_{2,3}, E_{4,3} et E_{5,3} jusqu'à une tension de 3,88V pour compenser la défaillance de l'accumulateur E_{3,3} en court-circuit. Cette surtension n'induit pas de détérioration pour des accumulateurs à base de Phosphate de Fer, pour lesquels la dégradation de l'électrolyte apparaît généralement au-delà de 4,5V. D'autres types d'accumulateurs supportant une tension entre leurs bornes supérieure à leur tension nominale pourront également être utilisés. On pourra notamment utiliser des accumulateurs d'un type pour lequel l'application d'une tension à leurs bornes supérieure de 15% à leur tension nominale n'induit pas leur destruction. Plus le nombre d'étages dans la batterie sera important, plus la surtension appliquée sur un accumulateur par rapport à sa tension nominale sera limitée lors d'un court-circuit. A la fin de la charge des accumulateurs de la branche Br₃ par les accumulateurs des autres branches, le courant traversant cette branche est nul. A cet instant, les branches Br₁, Br₂, Br₃ et Br₄ sont traversées par un courant de 19,4A, inférieur au courant nominal de 30A des accumulateurs. Les accumulateurs des différentes branches sont donc bien protégés des surintensités induites par un court-circuit dans un des accumulateurs. Les courants transversaux It_{i,j} sont nuls. Le courant traversant la charge 3 est de 77,6A, soit une valeur proche du courant en fonctionnement normal de la batterie 4. Une fois les accumulateurs de la branche Br₃ rechargés, cette branche peut également fournir un courant de moindre amplitude pour alimenter la charge 3.

La figure 6 représente des profils de décharge de la batterie 4 respectivement en fonctionnement normal (trait plein) et en présence d'un accumulateur en court-circuit (trait discontinu). On constate que la tension entre les bornes N et P de la batterie 4 à pleine charge est maintenue à un même niveau. Dans le cas d'une défaillance d'un accumulateur, le seuil limite de décharge S de la batterie 4 est atteint plus tôt à un instant T2. En fonctionnement normal, ce seuil de décharge n'est atteint qu'à un instant T1. La performance de la batterie 4 est ainsi réduite en présence de la défaillance. Le circuit 3 pourra détecter la défaillance d'un accumulateur en constatant une baisse de la durée de décharge en dessous d'un seuil prédéfini. Cette défaillance peut être signalée à l'utilisateur de la batterie 4 pour lui signaler la nécessité d'une réparation. La batterie 4 reste cependant encore fonctionnelle pendant plusieurs cycles de charge/décharge avant réparation. Les disjoncteurs ayant empêché une détérioration d'autres accumulateurs, la réparation pourra consister à changer uniquement l'accumulateur défaillant.

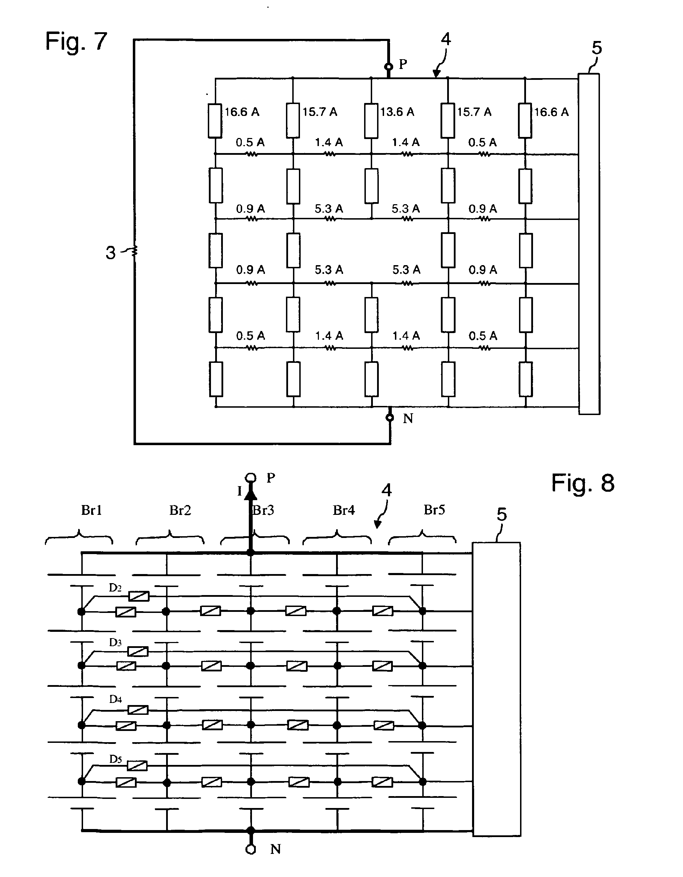

La figure 7 illustre la batterie 4 lors d'une défaillance d'un accumulateur formant un circuit ouvert ou coupe-circuit, en l'occurrence l'accumulateur E_{3,3}. Les disjoncteurs formant des connexions en parallèle permettent aux autres accumulateurs de compenser la défaillance de l'accumulateur E_{3,3}. Les disjoncteurs D_{2,1}, D_{2,4}, D_{5,1} et D_{5,4} sont traversés par un courant de 0,5A. Les disjoncteurs D_{3,1}, D_{3,4}, D_{4,1} et D_{4,4} sont traversés par un courant de 0,9A. Les disjoncteurs D_{2,2}, D_{2,3}, D_{5,2} et D_{5,3} sont traversés par un courant de 1,4A. Les disjoncteurs D_{3,2}, D_{3,3}, D_{4,2} et D_{4,3} sont traversés par un courant de 5,3A. Ainsi, aucun des courants traversant les disjoncteurs ne dépasse le seuil de coupure de ces disjoncteurs. Ainsi, l'ensemble des accumulateurs fonctionnels se déchargent, la capacité de la batterie 4 étant ainsi réduite dans une faible mesure. La batterie 4 reste donc fonctionnelle pendant un certain nombre de cycles de charge/décharge. Les accumulateurs E_{1,j} du premier étage Et₁ sont traversés respectivement par des courants de 16,6A, 15,7A, 13, 6A, 15,7A et 16,6A, inférieurs à la limite nominale de chacun de ces accumulateurs.

Le circuit 5 pourra identifier la défaillance de l'accumulateur E_{3,3}, notamment du fait de la décharge plus rapide de l'étage Et₃. Cette défaillance peut être signalée à l'utilisateur de la batterie 4 pour lui signaler la nécessité d'une réparation.

Le dimensionnement des disjoncteurs est avantageusement réalisé de sorte qu'un accumulateur en court-circuit induit une coupure par au moins un disjoncteur, et de sorte qu'un accumulateur en circuit ouvert conduit à des courants dans les différents disjoncteurs n'induisant pas de coupure.

Dans l'exemple illustré aux figures 3 à 7, le circuit 5 est connecté aux branches Br₁ à Br₄ par l'intermédiaire des noeuds de la branche Br₅. Après la coupure des disjoncteurs pour isoler une branche incluant un accumulateur défaillant, les branches se trouvant au-delà ne sont plus connectées au circuit 5 et ne peuvent plus être équilibrées. Dans les exemples de défaillance illustrés aux figures 4 à 7, les branches Br₁ et Br₂ ne sont plus équilibrées par le circuit 5.

La figure 8 illustre un mode de réalisation d'une batterie 4 résolvant cet inconvénient. Le principe de ce mode de réalisation est de connecter ensemble les noeuds d'un même étage de branches opposées. Ainsi, les noeuds des branches Br₁ et Br₅ sont connectés ensemble respectivement par l'intermédiaire de disjoncteurs D₂ à D₅. Le circuit 5 peut ainsi procéder à la charge et à l'équilibrage de toutes les branches non défaillantes même en présence d'une branche défaillante. On peut également envisager de connecter deux accumulateurs non adjacents d'un même étage au circuit d'équilibrage 5.

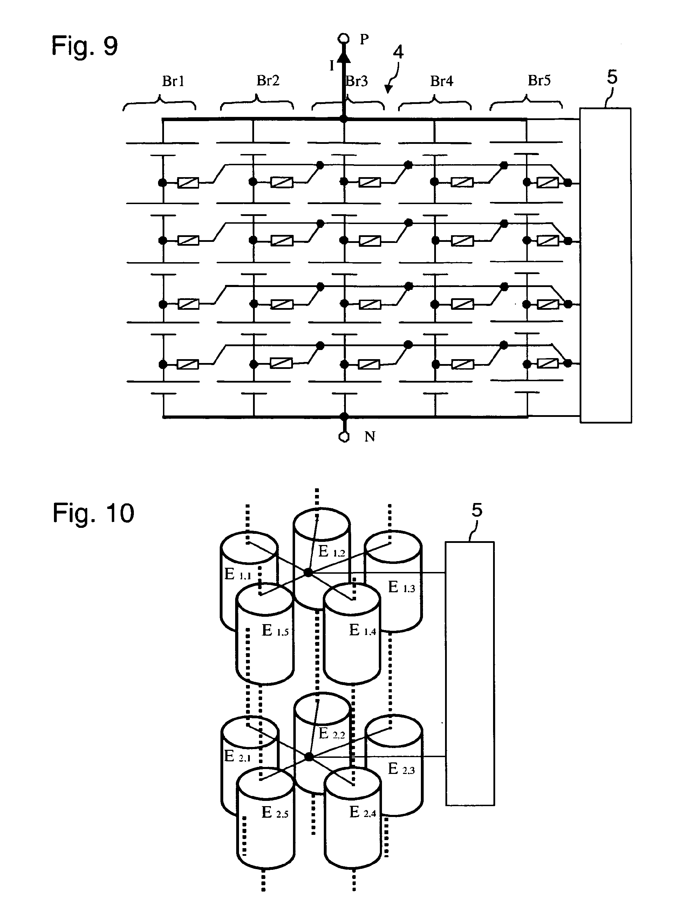

La figure 9 représente un autre mode de réalisation dans lequel les bornes des accumulateurs d'un même étage sont toutes connectées à une même borne du circuit 5. Une telle connexion permet de faciliter l'équilibrage de charge réalisé par le circuit 5. De plus, une telle connexion est particulièrement avantageuse lorsque chaque étage est formé de plusieurs accumulateurs répartis radialement pour former une batterie de forme sensiblement cylindrique, comme illustré à la figure 10. Les lignes en pointillés correspondent aux connexions électriques en série entre les différents étages de la batterie 4.

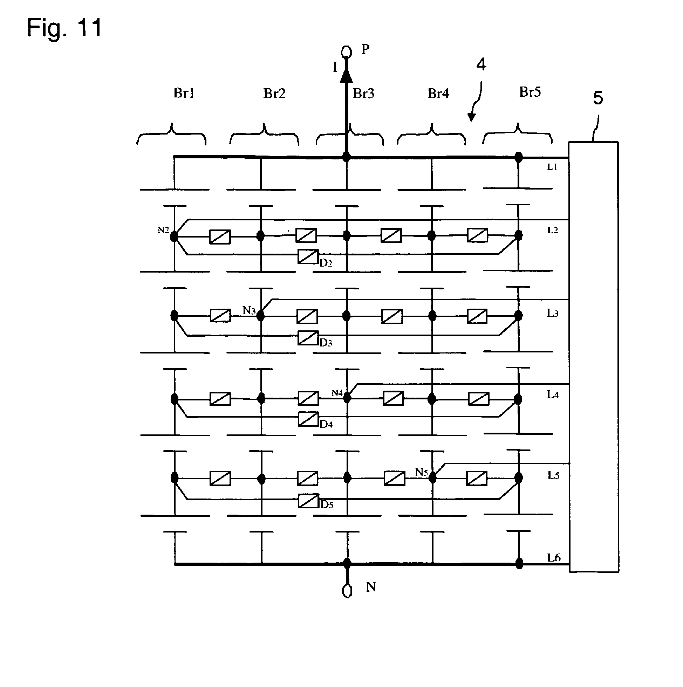

La figure 11 est une représentation schématique d'un autre mode de réalisation d'une batterie d'accumulateurs 4 selon l'invention. Comme dans l'exemple de la figure 8, les noeuds des branches Br₁ et Br₅ sont connectés ensemble respectivement par l'intermédiaire de disjoncteurs D₂ à D₅ afin de procéder à la charge et à l'équilibrage de toutes les branches non défaillantes, même en présence d'une branche défaillante. Le circuit 5 est connecté aux bornes de chaque étage d'accumulateurs, par l'intermédiaire des connexions L1 à L6. Par ailleurs, le circuit 5 présente une connexion directe (connexion ne passant pas par l'intermédiaire d'un noeud de connexion entre deux accumulateurs) avec chacune des branches Br1 à Br5, en l'occurrence au niveau des noeuds N2 à N5. Les noeuds N2 à N5 connectés directement au circuit 5 connectent en série deux accumulateurs d'une même branche. Ainsi, pour toute branche, on peut déterminer la tension entre un tel noeud et la borne P, ainsi que la tension entre un tel noeud et la borne N. Ainsi, on pourra identifier dans quelle branche un accumulateur est en court-circuit ou en coupe-circuit. Un accumulateur en court-circuit induira notamment une modification de la tension entre le noeud et la borne N, ainsi qu'une modification de la tension entre le noeud et la borne P. Dans l'exemple illustré, chaque connexion du circuit 5 à un noeud N2 à N5 permet ainsi de déterminer à la fois la branche défaillante et de procéder à la charge d'un étage de la batterie 4.

La résistance des connexions en parallèle des accumulateurs (par exemple la résistance interne des disjoncteurs) est avantageusement supérieure à la résistance interne des accumulateurs. On limite ainsi l'amplitude des courants dans les accumulateurs avant que les disjoncteurs induisent une coupure. On limite également l'incidence de la défaillance d'un accumulateur sur des branches distantes. Lorsque le circuit 5 est connecté aux noeuds d'une seule branche, on limite la valeur de la résistance des disjoncteurs afin d'éviter d'accroître dans une trop grande mesure le temps de charge des branches distantes du circuit 5.

Les disjoncteurs illustrés sont en l'occurrence des fusibles. La section conductrice d'un fusible fond en présence d'un courant supérieur à son seuil nominal. D'autres types de disjoncteurs peuvent bien entendu être utilisés. On pourra notamment utiliser des disjoncteurs de type réarmable. Des disjoncteurs de type CTP (à coefficient de température positif, dont la résistance croît fortement et brutalement avec la température) pourront également être utilisés. L'augmentation de la résistance d'un tel disjoncteur permet de limiter le courant le traversant à des valeurs très faibles, conduisant à une dissipation sans fusion de l'énergie produite par effet Joule. Si le défaut à l'origine du courant dans le disjoncteur disparaît, le disjoncteur retrouve progressivement son niveau de conduction initial. Des disjoncteurs de type CTP sont notamment disponibles dans le commerce.

## Revendications

1. Batterie d'accumulateurs (4), **caractérisée en ce qu'**elle comprend au moins des première et deuxième branches (Br₁, Br₂) présentant chacune au moins des premier (E_{1,1}, E_{1,2}) et deuxième (E_{2,1}, E_{2,2}) accumulateurs connectés en série, la batterie comprenant en outre un disjoncteur (D_{2,1}) par l'intermédiaire duquel les premiers accumulateurs sont connectés en parallèle et par l'intermédiaire duquel les deuxièmes accumulateurs sont connectés en parallèle, le seuil de coupure du disjoncteur étant dimensionné pour conduire du courant lorsque l'un desdits accumulateurs forme un circuit ouvert.

2. Batterie selon la revendication 1, comprenant une troisième branche (Br₃) présentant des premier (E_{1,3}) et deuxième (E_{2,3}) accumulateurs connectés en série, la batterie (4) comprenant en outre un autre disjoncteur (D_{2,2}) par l'intermédiaire duquel les premiers accumulateurs sont connectés en parallèle et par l'intermédiaire duquel les deuxièmes accumulateurs sont connectés en parallèle.

3. Batterie selon la revendication 1 ou 2, dans laquelle lesdits premiers accumulateurs forment un premier étage de la batterie et dans laquelle lesdits deuxièmes accumulateurs forment un second étage de la batterie, la batterie comprenant en outre un circuit (5) d'équilibrage de la charge des accumulateurs connecté aux bornes de chaque étage.

4. Batterie selon la revendication 3, dans laquelle chaque jonction entre les accumulateurs en parallèle est raccordée au circuit d'équilibrage (5).

5. Batterie selon les revendications 2 et 3, dans laquelle les accumulateurs des première et troisième branches (Br₁, Br₃) sont non adjacents, et dans laquelle le circuit d'équilibrage (5) est connecté aux bornes des accumulateurs des première et troisième branches.

6. Batterie selon la revendication 3, dans laquelle le circuit d'équilibrage (5) est connecté à chacune des branches par un noeud de chaque branche connectant en série deux accumulateurs de la branche.

7. Batterie selon l'une quelconque des revendications précédentes, dans laquelle la section de la jonction entre les accumulateurs en parallèle est inférieure à la section de la jonction entre les accumulateurs en série.

8. Batterie selon l'une quelconque des revendications précédentes, dans laquelle le disjoncteur comprend une connexion électrique fusible.

9. Batterie selon l'une quelconque des revendications précédentes, dans laquelle le seuil de coupure du disjoncteur est dimensionné pour s'ouvrir lorsque l'un desdits accumulateurs est en court-circuit.

10. Batterie selon l'une quelconque des revendications précédentes, dans laquelle lesdits accumulateurs sont d'un type pour lequel l'application d'une tension à leurs bornes supérieure de 15% à leur tension nominale n'induit pas leur destruction.

11. Batterie selon l'une quelconque des revendications précédentes, dans laquelle les accumulateurs sont de type lithium-ion.

12. Batterie selon l'une quelconque des revendications précédentes, dans laquelle lesdites branches sont dépourvues de disjoncteurs de protection disposés en série avec lesdits accumulateurs.

13. Batterie selon l'une quelconque des revendications précédentes, dans laquelle la résistance interne desdits accumulateurs est inférieure à la résistance interne dudit disjoncteur.

## Patentansprüche

1. Akkumulatorenbatterie (4), **dadurch gekennzeichnet, dass** sie mindestens erste und zweite Abschnitte (Br₁, Br₂) umfasst, die jeweils mindestens erste (E_{1,1}, E_{1,2}) und zweite (E_{2,1}, E_{2,2}) Akkumulatoren aufweisen, die in Serie geschaltet sind, wobei die Batterie ferner einen Schalter (D_{2,1}) umfasst, durch den die ersten Akkumulatoren parallel geschaltet sind, und durch den die zweiten Akkumulatoren parallel geschaltet sind, wobei die Abschaltschwelle des Schalters derart ausgelegt ist, dass Strom geführt wird, wenn einer der Akkumulatoren eine offene Schaltung bildet.

2. Batterie nach Anspruch 1, umfassend einen dritten Abschnitt (Br₃), der erste (E_{1,3}) und zweite (E_{2,3}) Akkumulatoren aufweist, die in Serie geschaltet sind, wobei die Batterie (4) ferner einen weiteren Schalter (D_{2,2}) umfasst, durch den die ersten Akkumulatoren parallel geschaltet sind, und durch den die zweiten Akkumulatoren parallel geschaltet sind.

3. Batterie nach Anspruch 1 oder 2, bei der die ersten Akkumulatoren eine erste Stufe der Batterie bilden, und bei der die zweiten Akkumulatoren eine zweite Stufe der Batterie bilden, wobei die Batterie ferner eine Schaltung (5) zum Ausgleichen der Ladung der Akkumulatoren, die an die Klemmen jeder Stufe angeschlossen ist, umfasst.

4. Batterie nach Anspruch 3, bei der jede Verbindung zwischen den parallel geschalteten Akkumulatoren an die Ausgleichsschaltung (5) angeschlossen ist.

5. Batterie nach den Ansprüchen 2 und 3, bei der die Akkumulatoren der ersten und dritten Abschnitte (Br₁, Br₃) nicht aneinandergrenzend sind, und bei der die Ausgleichsschaltung (5) an die Klemmen der Akkumulatoren der ersten und dritten Abschnitte angeschlossen ist.

6. Batterie nach Anspruch 3, bei der die Ausgleichsschaltung (5) an jeden der Abschnitte durch einen Knotenpunkt jedes Abschnitts, der zwei Akkumulatoren des Abschnitts in Serie schaltet, angeschlossen ist.

7. Batterie nach einem der vorhergehenden Ansprüche, bei der der Querschnitt der Verbindung zwischen den parallel geschalteten Akkumulatoren kleiner als der Querschnitt der Verbindung zwischen den in Serie geschalteten Akkumulatoren ist.

8. Batterie nach einem der vorhergehenden Ansprüche, bei der der Schalter eine elektrische Schmelzverbindung umfasst.

9. Batterie nach einem der vorhergehenden Ansprüche, bei der die Abschaltschwelle des Schalters derart ausgelegt ist, dass sie sich öffnet, wenn einer der Akkumulatoren kurzgeschlossen ist.

10. Batterie nach einem der vorhergehenden Ansprüche, bei der die Akkumulatoren von einem Typ sind, bei dem das Anlegen einer um 15 % höheren Spannung als ihre Nominalspannung an ihren Klemmen nicht zu ihrer Zerstörung führt.

11. Batterie nach einem der vorhergehenden Ansprüche, bei der die Akkumulatoren vom Lithium-Ionen-Typ sind.

12. Batterie nach einem der vorhergehenden Ansprüche, bei der die Abschnitte keine Schutzschalter, die mit den Akkumulatoren in Serie angeordnet sind, aufweisen.

13. Batterie nach einem der vorhergehenden Ansprüche, bei der der innere Widerstand der Akkumulatoren kleiner als der innere Widerstand des Schalters ist.

## Claims

1. A storage battery (4) **characterized in that** the storage battery comprises at least first and second branches (Br₁, Br₂) each presenting at least first (E₁, ₁, E₁,₂) and second (E_{2,1}, E₂,₂) storage cells connected in series, the battery also comprising a switch (D₂,₁) via which the first storage cells are connected in parallel and via which the second storage cells are connected in parallel, the cutoff threshold of the switch being dimensioned to conduct current when one of said storage cells forms an open circuit.

2. The battery according to claim 1, comprising a third branch (Br₃) presenting first (E_{1,3}) and second (E_{2,3}) storage cells connected in series, the battery (4) also comprising another switch (D_{2,2}) via which the first storage cells are connected in parallel and via which the second storage cells are connected in parallel.

3. The battery according to claim 1 or 2, in which said first storage cells form a first stage of the battery and in which said second storage cells form a second stage of the battery, the battery further comprising a balancing circuit (5) for balancing the charge of the storage cells, connected to the terminals of each stage.

4. The battery according to claim 3, in which each junction between the storage cells in parallel is connected to the balancing circuit (5).

5. The battery according to claims 2 and 3, in which the storage cells of the first and third branches (Br₁, Br₃) are nonadjacent, and in which the balancing circuit (5) is connected to the terminals of the storage cells of the first and third branches.

6. The battery according to claim 3, in which the balancing circuit (5) is connected to each of the branches via a node of each branch connecting two storage cells of the branch in series.

7. The battery according to any one of the previous claims, in which the cross section of a junction between storage cells in parallel is smaller than a cross section of a junction between storage cells in series.

8. The battery according to any one of the previous claims, in which the switch comprises a fusible electrical connection.

9. The battery according to any one of the previous claims, in which the cutoff threshold of the switch is dimensioned to open when one of said storage cells is short-circuited.

10. The battery according to any one of the previous claims, in which said storage cells are of a type to withstand the application of voltage above 15% of their nominal voltage at their terminals.

11. The battery according to any one of the previous claims, in which the storage cells are of the lithium ion type.

12. The battery according to any one of the previous claims, in which said branches are devoid of protective switches disposed in series with said storage cells.

13. The battery according to any one of the previous claims, in which the internal resistance of said storage cells is less than the internal resistance of said switch.
